# FASCICULE DE BREVET EUROPEEN

(11) **EP 2 157 015 B1**
(45) Date de publication et mention de la délivrance du brevet: **26.02.2014**
(21) Numéro de dépôt: 09168236.9
(22) Date de dépôt: 20.08.2009
(51) Int. Cl.: B64D 13/00, B64D 13/06, B64D 47/00, F25B 25/00

(54) **Système de refroidissement d'équipements électriques ou électroniques d'un aéronef**
Kühlsystem für elektrischen oder elektronischen Ausstattungen eines Flugzeugs
Cooling system for aircraft electric or electronic devices

(30) Priorité: 21.08.2008 FR 0855669; 21.08.2008 FR 0855670
(43) Date de publication de la demande: 24.02.2010
(73) Titulaire: Airbus Opérations SAS, 31060 Toulouse (FR)
(72) Inventeur: Murer, Yann, 31240 Saint-Jean (FR); Zeller, Augustin, 31200 Toulouse (FR)
(74) Mandataire: den Braber, Gerard Paul

(56) Documents cités:
- WO-A-2008/061712
- WO-A1-2008/082385
- WO-A1-2009/030448
- DE-A1-102006 059 418
- US-A- 4 966 005
- US-A- 5 050 389

## Description

### DOMAINE TECHNIQUE DE L'INVENTION

La présente invention se rapporte à un système de refroidissement d'équipements électriques ou électroniques à bord d'un aéronef. L'invention se rapporte également à un aéronef comportant un tel système.

### ÉTAT DE LA TECHNIQUE ANTÉRIEURE

Un aéronef, tel qu'un avion de transport commercial moderne, comporte différents équipements électriques et électroniques destinés à son fonctionnement, dont notamment des équipements électroniques employés dans les systèmes avioniques, des équipements électriques généraux et des instruments de vol du poste de pilotage. Ces équipements sont généralement regroupés dans des soutes et des armoires situées à différents endroits dans la structure de l'aéronef. Ces soutes et ces armoires sont généralement munies de systèmes de refroidissement, notamment de systèmes de refroidissement par air soufflé, qui permettent d'en contrôler la température intérieure et ce, afin d'éviter que les équipements électriques et électroniques qui y sont regroupés ne surchauffent.

Le Rapport d'information aérospatiale intitulé « Electrical and Electronic Equipment Cooling in Commercial Transports», émis par l'organisation Society of Automotive Engineers Inc. (SAE) le 15 décembre 1956, tel que révisé le 1er septembre 1992 (ci-après, le « Rapport SAE »), comporte un sommaire des systèmes et méthodes de refroidissement d'équipements électriques et électroniques par air poussé pouvant être employés dans l'aviation commerciale. De tels systèmes comportent généralement un dispositif de poussée d'air et un ou plusieurs conduits destinés à acheminer l'air poussé à l'endroit désiré. Les équipements électriques et électroniques à refroidir sont disposés de façon à permettre leur couplage thermique maximal avec l'air. De tels systèmes peuvent être ouverts (utilisation de l'air ambiant et recirculation de cet air dans d'autres compartiments de l'aéronef) ou fermés (recirculation du même air en circuit dans un système de refroidissement indépendant).

Toutefois, en raison (i) de l'augmentation de la densité de puissance des nouveaux équipements électriques et électroniques utilisés dans les avions commerciaux modernes ou qui sont destinés à équiper les avions commerciaux en cours de développement, (ii) de l'augmentation du nombre de composants des équipements électriques et électroniques à être refroidis, et (iii) du fait que ces équipements sont de plus en plus densément regroupés, les équipements électriques et électroniques des avions commerciaux dégagent de plus en plus de chaleur et la température de l'atmosphère des soutes et des armoires dans lesquelles ils sont regroupés tend à augmenter de façon significative. Inversement, les nouveaux équipements électriques et électroniques développés pour l'aviation commerciale, et notamment les équipements électroniques des systèmes avioniques, requièrent de plus en plus d'être opérés à des températures bien contrôlées.

Sans système de refroidissement approprié, la température ambiante des soutes et des armoires dans lesquelles les équipements électriques ou électroniques sont regroupés peut donc s'élever au dessus d'une température maximale à laquelle ces équipements peuvent être opérés. Il peut alors en résulter : un mauvais fonctionnement de ces équipements, une diminution de leur durée de vie utile, leur défaillance ou leur endommagement définitif. Une telle situation est critique lorsqu'il est question d'équipements électriques et électroniques utilisés dans le fonctionnement d'un aéronef tel un avion de transport commercial.

Toutefois, les systèmes généralement connus dans l'art antérieur et ceux proposés dans le Rapport SAE n'apportent pas de solution satisfaisante à cette nouvelle problématique. La simple augmentation de la quantité et du débit d'air soufflé sur les composantes électriques ou électroniques à refroidir comporte des inconvénients importants : (i) faible efficacité thermique, (ii) diminution de l'espace commercial disponible dans l'aéronef, (iii) augmentation du bruit, (iv) augmentation de la consommation énergétique, et (v) risque de dommage des équipements refroidis.

Une solution à cette problématique est le recours à un système de refroidissement à air soufflé pré-refroidi circulant en continu dans une boucle fermée. Le Rapport SAE décrit notamment un tel système, dont l'air re-circulé peut être pré-refroidi au moyen d'un échangeur thermique qui en permet le couplage thermique avec l'atmosphère extérieure de l'aéronef, lequel est présumé être suffisamment froid pour refroidir l'air re-circulé à un niveau acceptable. Le Rapport SAE décrit également que lorsque l'aéronef est au sol par temps chaud, un système de réfrigération auxiliaire permet de refroidir l'air re-circulé dans la boucle à un niveau acceptable. Ce système comporte néanmoins certains problème
(i) le recours à l'atmosphère extérieure de l'aéronef comme source principale de dissipation de la chaleur dégagée par les équipements électriques et électroniques ne permet pas de garantir un niveau de refroidissement constant dans toutes les conditions d'opération de ces équipements et peut, dans certaines conditions d'opération, nuire au refroidissement de ces équipements; et
(ii) le recours à un système de réfrigération auxiliaire peut impliquer une demande énergétique additionnelle et une augmentation significative de la masse totale du système de refroidissement à air soufflé.

Le brevet US 4,966,005 décrit un système (ECS) pour fournir de l'air conditionné et pressurisé à un aéronef et pour refroidir par liquide des équipements avioniques. Le refroidissement est essentiellement accompli par un sous-système de refroidissement « liquide-vapeur » comprenant un condenseur via lequel un flux de carburant passe. A partir du condenseur le carburant est acheminé vers un moteur ou retourné vers un réservoir de carburant.

Le document US 5 050 389 décrit un système de refroidissement avec les caractéristiques du préambule de la revendication 1.

### EXPOSÉ DE L'INVENTION

Il existe un besoin pour un système de refroidissement d'équipements électriques ou électroniques à bord un aéronef qui soit relativement peu complexe et efficace au niveau thermique et au niveau énergétique.

Selon un aspect de la présente invention, un système de refroidissement pour équipements électriques ou électroniques à bord d'un aéronef, comprend les caractéristiques énoncées à la revendication 1.

Un tel système permet un refroidissement suffisamment efficace d'équipements électriques ou électroniques, notamment d'équipements à haute densité de puissance, tout en permettant, entre autre, une réduction de la dimension des conduits du circuit et une réduction du bruit généré par la circulation du médium caloporteur dans le circuit. De plus, un tel système permet, entre autre, une intégration plus souple du système de refroidissement en rendant la localisation du circuit de refroidissement fermé tertiaire indépendante de la localisation du circuit fermé principal.

Un mode de réalisation selon la revendication 3 contribue, entre autre, à obtenir un bon rendement énergétique, par exemple dans le cas où la température de fonctionnement des équipements du premier compartiment est inférieure à la température de fonctionnement des équipements du second compartiment.

Un mode de réalisation selon la revendication 4 contribue, entre autre, à obtenir un bon rendement thermique, par exemple dans le cas où les équipements du premier compartiment ceux du second compartiment ont approximativement la même température de fonctionnement.

Un mode de réalisation selon la revendication 5 contribue, entre autre, à obtenir un bon rendement énergétique.

Un mode de réalisation selon la revendication 6 permet, entre autre, de recourir à l'air ambiant dans le cas, par exemple, d'un disfonctionnement de l'échangeur thermique principal.

Un mode de réalisation selon la revendication 7 permet, entre autre, d'assurer un refroidissement convenable dans le cas d'un disfonctionnement de l'échangeur thermique secondaire et permet également d'améliorer le rendement énergétique en ayant recours à l'air ambiant externe afin de refroidir le fluide caloporteur circulant dans le circuit de refroidissement fermé secondaire.

Un mode de réalisation selon la revendication 8 permet d'assurer un refroidissement convenable dans le cas d'un disfonctionnement de l'échangeur thermique principal et permet également d'améliorer le rendement énergétique en ayant recours à l'air ambiant externe afin de refroidir le fluide caloporteur circulant dans le circuit de refroidissement fermé principal.

Un autre aspect de l'invention concerne un aéronef comportant un système de refroidissement tel que décrit dans ce qui précède.

### DESCRIPTION DES FIGURES

La présente invention est illustrée par des exemples non limitatifs sur les figures jointes, dans lesquelles des références identiques indiquent des éléments similaires:
La Figure 1 illustre schématiquement une première réalisation possible de l'invention ;
La Figure 2 illustre schématiquement une deuxième réalisation possible de l'invention ;
La Figure 3 illustre schématiquement une troisième réalisation possible de l'invention ;
La Figure 4 illustre schématiquement une quatrième réalisation possible de l'invention ; et
La Figure 5 illustre schématiquement une cinquième réalisation possible de l'invention.

### DESCRIPTION DÉTAILLÉE D'UNE RÉALISATION DE L'INVENTION

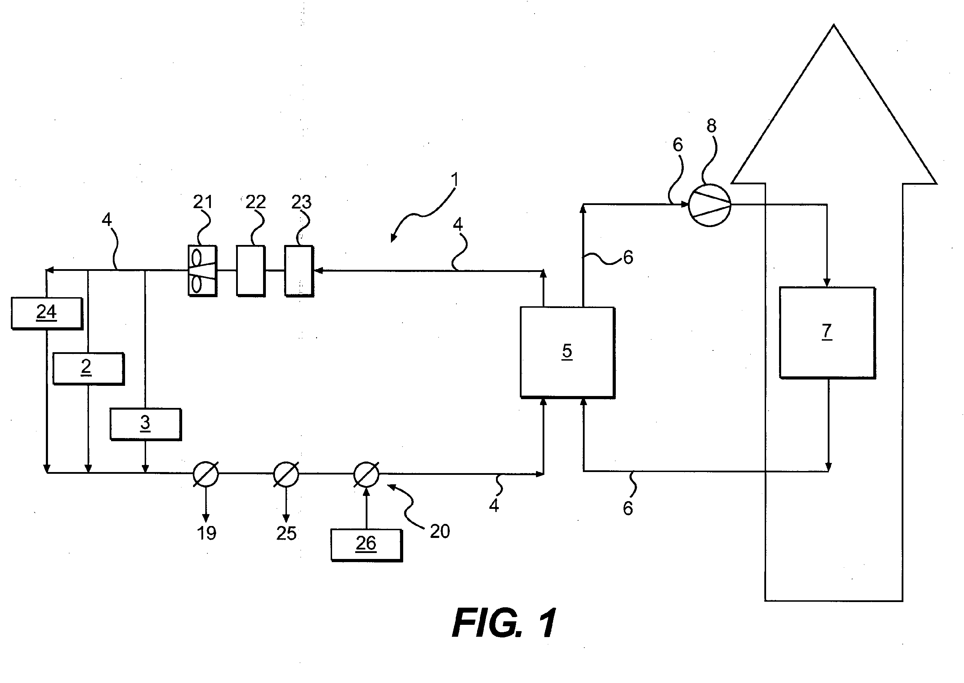

Une réalisation possible de l'invention de même que certaines variations pouvant être apportées à celle-ci sont décrites ci-dessous en faisant référence aux Figures 1 à 5. Ces réalisations de l'invention et de certaines variantes pouvant leur être apportées sont données à titre illustratif et ne doivent en rien limiter la portée de l'invention. D'autres réalisations possibles de l'invention et variations seront apparentes pour la personne versée dans l'art.

Le système de refroidissement d'équipements électriques ou électroniques (1) permet de refroidir au moins un premier groupe d'équipements électriques ou électroniques (2), un second groupe d'équipements électriques ou électroniques (3) et un troisième groupe d'équipements électriques ou électroniques (24). Dans cette réalisation illustrative de l'invention, le premier groupe d'équipements électriques ou électroniques (2) comprend des équipements électroniques des systèmes avioniques d'un avion de transport commercial qui peuvent, par exemple, être regroupés entre eux selon des besoins thermiques similaires dans une première portion de l'aéronef telle que, par exemple, dans une baie ou dans un compartiment. De façon générale, on retrouve parmi ceux-ci les équipements électroniques associés aux systèmes d'instrumentation aéronautique et de communication de l'avion, dont notamment, à titre illustratif, des ordinateurs de bord, des microprocesseurs et calculateurs, des contrôleurs, des dispositifs d'affichage et écrans, des sondes et antennes, etc..

D'autre part, le second groupe d'équipements électriques ou électroniques (3) comprend des composantes électriques ou électromécaniques plus généralement associées au fonctionnement de l'avion dont notamment, toujours à titre illustratif, des centres de distribution électrique, des convertisseurs, des unités de rectification, des disjoncteurs, des actionneurs, des pompes électriques, etc.. Les équipements du second groupe d'équipements électriques ou électroniques (3) peuvent par exemple être regroupés entre eux selon des besoins thermiques similaires dans une seconde portion de l'aéronef telle que, par exemple, dans un compartiment. De plus, le troisième groupe d'équipements électriques ou électroniques (24) comprend des instruments de vol du poste de pilotage de l'aéronef. Les équipements du troisième groupe d'équipements électriques ou électroniques (24) peuvent, par exemple, être regroupés entre eux selon des besoins thermiques similaires dans une troisième portion de l'aéronef telle que, par exemple dans une baie, dans un compartiment ou derrière une planche de bord.

Le système de refroidissement (1) comprend un ensemble de conduits formant un circuit fermé principal (4) dans lequel circule un médium caloporteur. Le médium caloporteur peut être un quelconque élément ou mélange d'éléments, dans un état gazeux ou fluide, capable de transporter de la chaleur. Dans les réalisations illustratives représentées aux Figures 1 à 5, l'air constitue le médium caloporteur à titre d'exemple. L'air circule dans un sens indiqué par les flèches. Ces conduits relient entre eux les différents éléments du système de refroidissement (1). Le circuit (4) dans son ensemble peut être étanche ou semi étanche, c'est-à-dire qu'en opération, il peut laisser s'échapper un volume acceptable d'air du circuit et permettre à un volume acceptable d'air provenant de l'extérieur du circuit de s'y introduire.

Les équipements du premier, du second et du troisième groupe d'équipements électriques ou électroniques (2, 3, 24) peuvent être refroidis de façon directe ou indirecte. Lorsque refroidis de façon directe, l'air refroidi circulant dans le circuit fermé (4) est acheminé à l'entrée d'un compartiment étanche ou semi étanche (non illustré) dans lequel sont regroupés certains équipements électriques ou électroniques à refroidir. La chaleur des équipements électriques ou électroniques est directement transmise à l'air qui circule librement dans le compartiment et auquel ils sont donc directement couplés de façon thermique. L'air ayant emmagasiné la chaleur dégagée par les équipements électriques ou électroniques ressort ensuite par la sortie du compartiment et poursuit sa course dans le circuit fermé principal (4). Chaque compartiment étanche est muni d'un dispositif (non illustré) afin de prévenir une pression trop importante dans le compartiment. Ce dispositif peut être, par exemple, une soupape d'évacuation.

Alternativement, lorsque les équipements électriques ou électroniques sont refroidis de façon indirecte, ils sont couplés de façon thermique à un échangeur thermique également couplé thermiquement avec l'air circulant dans le circuit fermé (4).

La Figure 1 présente une première réalisation de l'invention comportant un échangeur thermique principal (5) qui permet à lui seul de refroidir l'air circulant dans le circuit fermé principal (4). Dans cette réalisation, l'échangeur thermique principal (5) est un évaporateur qui permet de coupler thermiquement l'air circulant dans le circuit principal fermé (4) à un fluide caloporteur circulant dans un second circuit de refroidissement fermé (6), fluidiquement indépendant du circuit fermé principal (4).

Un second échangeur thermique (7) est également couplé thermiquement avec le fluide caloporteur circulant dans le second circuit de refroidissement fermé indépendant (6). Ce second échangeur thermique (7) est un condensateur refroidi par un système à air poussé conventionnel bien connu par la personne versée dans l'art, par exemple un « ram air » en anglais (« système à air dynamique » en français). L'air utilisé pour refroidir le second échangeur thermique (7) peut notamment provenir de l'extérieur de l'avion et être dirigé vers le second échangeur thermique (7) par un système de ventilation approprié.

Le cycle de refroidissement du second circuit de refroidissement fermé indépendant (6) est essentiellement le suivant : l'échangeur thermique principal (5) permet de transmettre la chaleur emmagasinée par l'air circulant dans le circuit fermé principal (4) au fluide caloporteur du second circuit de refroidissement fermé indépendant (6), lequel est alors évaporé à son état gazeux. Ce fluide caloporteur est acheminé au second échangeur thermique (7), en l'occurrence un condensateur, qui permet de transmettre la chaleur emmagasinée par le fluide caloporteur à l'air utilisé pour refroidir ce second échangeur thermique (7). Le fluide caloporteur refroidi est alors condensé en son état liquide et réacheminé vers l'échangeur thermique principal (5) pour à nouveau emmagasiner de la chaleur.

Un système de poussée (8), tel un compresseur, permet au fluide caloporteur à l'état gazeux de circuler de l'échangeur thermique principal (5) vers le second échangeur thermique (7).

Certains éléments permettant une utilisation optimale du circuit fermé principal (4) sont également illustrés à la Figure 1 et décrits ci-dessous.

Un ventilateur (21) permet de faire circuler l'air dans le circuit fermé principal (4). Ce ventilateur (21) est muni d'un système de contrôle qui permet d'en ajuster la poussée en fonction du niveau de refroidissement des équipements électriques ou électroniques (2, 3, 24) recherché. Plus la poussée du ventilateur (21) sera grande, plus la vélocité de l'air circulant dans le circuit fermé principal (4) sera élevée et plus la chaleur pourra être extraite des équipements électriques ou électroniques (2, 3, 24). Ce système de contrôle est automatisé. Il est relié à un ou plusieurs capteurs (non illustrés) prenant la température de l'air à différents endroits dans le circuit fermé principal (4), dont notamment avant le premier groupe d'équipements électriques ou électroniques (2), avant le second groupe d'équipements électriques ou électroniques (3), et après l'échangeur thermique principal (5).

Afin d'éviter que de la poussière ne se dépose sur les équipements électriques ou électroniques refroidis (2, 3, 24) ou que des particules présentes dans l'air ne les endommage, le circuit fermé principal (4) comprend également un filtre (22), placé avant le ventilateur (20) dans le cycle de circulation de l'air.

Des capteurs permettant de déterminer la pression et la vélocité de l'air circulant dans le circuit fermé principal (4) placés à différents endroits dans le circuit (4) permettent de détecter toute obstruction ou ouverture dans le circuit. De tels capteurs placés avant et après le filtre (22) pourront indiquer à quel moment le filtre est obstrué.

Les fluctuations de la température de l'air à travers l'ensemble du circuit fermé principal (4) étant susceptibles de créer de la condensation et des particules d'eau pouvant endommager les équipements électriques ou électroniques à refroidir (2, 3, 24) lorsque ceux-ci sont refroidis de façon directe, le circuit fermé principal (4) comprend également un séparateur d'eau (23).

Une valve d'admission (20), reliée à un mélangeur (26) peut laisser entrer l'air d'une source extérieure au circuit fermé principal (4), notamment si le ventilateur (21) cesse de fonctionner. Dans un tel cas, une valve d'échappement (25) s'ouvre alors afin d'évacuer l'air de la cabine d'une source extérieure au circuit fermé principal (4).

Une valve d'échappement (19) peut être utilisée pour permettre l'évacuation de l'air circulant dans le circuit fermé principal (4) à l'extérieur de l'avion, notamment si cet air devient contaminé, par exemple, par de la fumée dégagée par un équipement électrique ou électronique du premier, du second ou du troisième groupe (2, 3, 24).

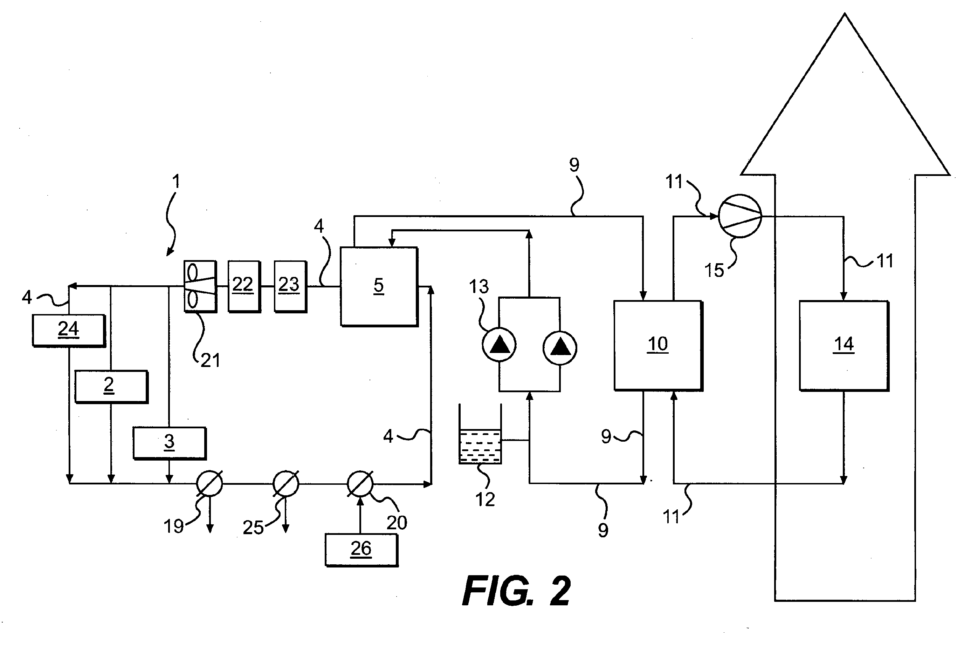

La Figure 2 illustre une réalisation de l'invention dans laquelle le premier groupe d'équipements électriques ou électroniques (2), le second groupe d'équipements électriques ou électroniques (3) et le troisième groupe d'équipements électriques ou électroniques (24) sont placés en parallèle dans le circuit fermé principal (4), un échangeur thermique principal (5) permettant à lui seul de refroidir l'air circulant dans le circuit fermé principal (4). Dans cette réalisation, deux circuits de refroidissement fermés indépendants (9, 11), placés en série, sont utilisés pour refroidir l'air circulant dans le circuit fermé principal (4) à travers l'échangeur thermique principal (5).

Dans cette réalisation de l'invention, l'échangeur thermique principal (5) permet le couplage thermique de l'air circulant dans le circuit fermé principal (4) et d'un liquide caloporteur circulant dans un second circuit de refroidissement fermé indépendant (9). Un second échangeur thermique (10) permet le couplage thermique de ce liquide caloporteur avec un fluide caloporteur circulant dans un troisième circuit de refroidissement fermé indépendant (11). Un troisième échangeur thermique (14) est couplé thermiquement avec le fluide caloporteur circulant dans le troisième circuit de refroidissement fermé indépendant (11).

Le second circuit de refroidissement fermé indépendant (9) comporte un réservoir de liquide caloporteur (12) permettant de compenser les variations de volume du liquide caloporteur dans le second circuit de refroidissement fermé indépendant (9) en raison de changement de température ou de fuite. Un système de poussée (13), en l'occurrence une pompe principale et une pompe auxiliaire destinée à prendre le relais en cas de défaillance de la pompe principale, permet de faire circuler le liquide caloporteur dans le circuit (9).

Le cycle de refroidissement du second circuit de refroidissement fermé indépendant (9) est essentiellement le suivant : l'échangeur thermique principal (5) permet de transmettre la chaleur emmagasinée par l'air circulant dans le circuit fermé principal (4) au liquide caloporteur circulant dans le second circuit de refroidissement fermé indépendant (9). Ce liquide caloporteur est acheminé au second échangeur thermique (10) qui permet de transmettre la chaleur emmagasinée par le liquide caloporteur au fluide caloporteur circulant dans le troisième circuit de refroidissement fermé indépendant (11). Le liquide caloporteur circulant dans le second circuit de refroidissement fermé indépendant (9) ainsi refroidi est alors réacheminé vers l'échangeur thermique principal (5) pour à nouveau emmagasiner de la chaleur.

Le second échangeur thermique (10) est un évaporateur, le troisième échangeur thermique (14) est un condensateur refroidi par un système à air poussé conventionnel, le fluide caloporteur circulant dans le troisième circuit de refroidissement fermé indépendant (11) est à l'état gazeux entre le second échangeur thermique (10) et le troisième échangeur thermique (14), et à l'état liquide du troisième échangeur thermique (14) au second échangeur thermique (10). Le troisième circuit de refroidissement fermé indépendant (11) est semblable au second circuit de refroidissement fermé indépendant (6) de la première réalisation de l'invention illustrée à la Figure 1. Le troisième circuit de refroidissement fermé indépendant (11) comporte également un compresseur (15).

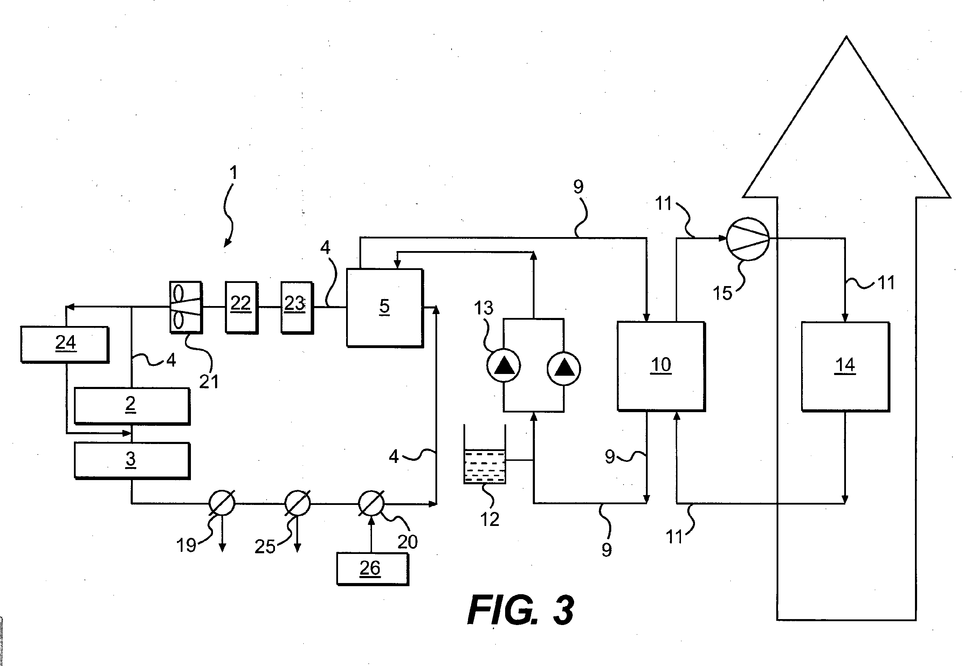

La Figure 3 illustre une réalisation de l'invention dans laquelle le premier groupe d'équipements électriques ou électroniques (2) et le second groupe d'équipements électriques ou électroniques (3) sont placés en série dans le circuit fermé principal (4) et le troisième groupe d'équipements électriques ou électroniques (24) est placé en parallèle du premier groupe d'équipements électriques ou électroniques (2). Une telle disposition en série permet un rendement optimal du système puisque les équipements du premier et troisième groupes (2, 24) nécessitent d'être maintenus à une température plus basse que ceux du second groupe (3). La température de l'air utilisée pour refroidir les équipements du premier et du troisième groupe (2, 24) peut donc se situer entre approximativement 10°C et 15°C. Cet air, une fois chargé de la chaleur dégagée par les équipements du premier groupe (2) peut être directement dirigé vers les équipements du deuxième groupe (3) qu'il atteindra à une température approximative de 40°C.

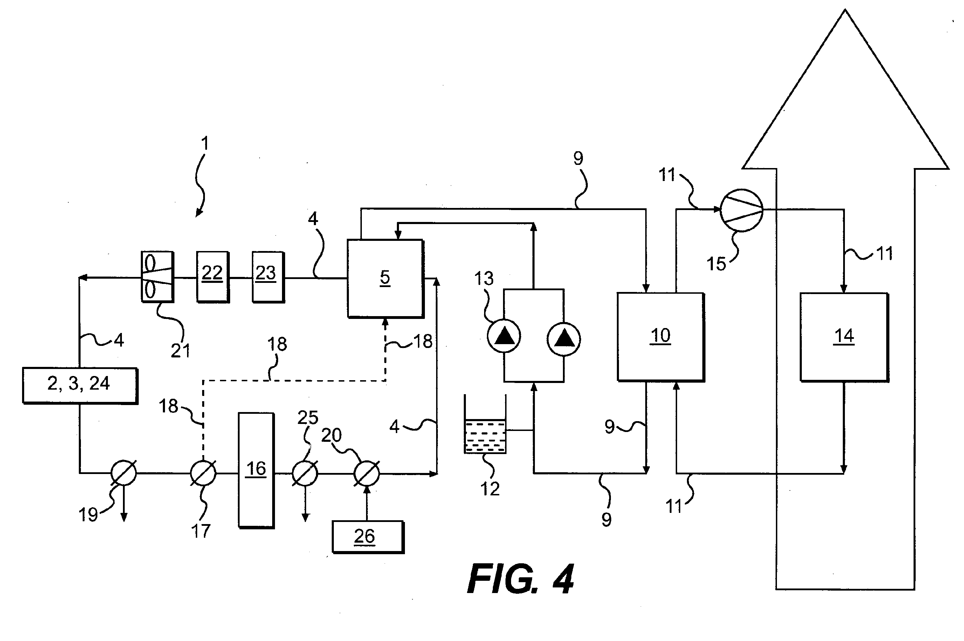

La Figure 4 illustre une autre réalisation de l'invention dans laquelle un échangeur thermique secondaire (16) est présent dans le circuit fermé principal (4). Cet échangeur thermique secondaire (16) peut prendre la forme d'un échangeur de peau qui permet de coupler thermiquement l'air circulant dans le circuit fermé principal (4) à l'air se situant à l'extérieur de l'avion. Cette variation de l'invention permet de refroidir l'air circulant dans le circuit fermé principal (4) sans nécessiter un apport d'énergie auxiliaire et peut permettre un rendement de refroidissement adéquat pour les fins de la présente invention lorsque, par exemple, l'avion est en altitude ou lorsqu'il est opéré au sol par temps froid.

Toutefois, dans certaines conditions d'opération, par exemple lorsque l'appareil est au sol par temps chaud, un échange thermique entre l'air à l'extérieur de l'avion et l'air circulant dans le circuit fermé principal (4) peut ne pas être souhaitable puisqu'il pourrait imposer une surcharge de travail à l'échangeur thermique principal (5). Une valve (17) située avant l'échangeur thermique secondaire (16) permet donc de détourner l'air circulant dans le circuit fermé principal (4) directement vers l'échangeur thermique principal (5) au moyen d'un conduit de dérivation (18). La quantité d'air détournée peut varier en fonction de la température à l'extérieur de l'avion et de la température à laquelle les groupes d'équipements électriques et électroniques (2, 3, 24) doivent être maintenus.

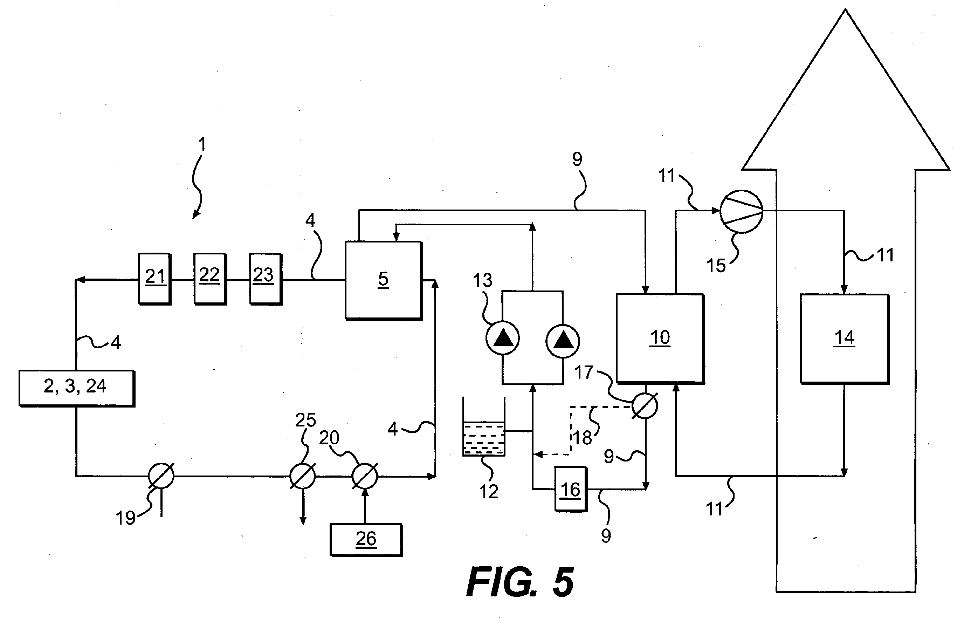

La Figure 5 illustre une autre réalisation de l'invention dans laquelle un échangeur thermique secondaire (16) est présent dans le second circuit de refroidissement fermé indépendant (9). Cet échangeur thermique secondaire (16) peut prendre la forme d'un échangeur de peau qui permet de coupler thermiquement le liquide circulant dans le second circuit de refroidissement fermé indépendant (9) à l'air se situant à l'extérieur de l'avion. Cette variation de l'invention permet de refroidir le liquide circulant dans le second circuit de refroidissement fermé indépendant (9) sans nécessiter un apport d'énergie auxiliaire et peut permettre un rendement de refroidissement adéquat pour les fins de la présente invention lorsque, par exemple, l'avion est en altitude ou lorsqu'il est opéré au sol par temps froid.

Toutefois, dans certaines conditions d'opération, par exemple lorsque l'appareil est au sol par temps chaud, un échange thermique entre l'air à l'extérieur de l'avion et le liquide circulant dans le second circuit de refroidissement fermé indépendant (9) peut ne pas être souhaitable puisqu'il pourrait imposer une surcharge de travail au second échangeur thermique (10). Une valve (17) située entre le second échangeur thermique (10) et l'échangeur thermique secondaire (16) permet donc de détourner le liquide circulant dans le second circuit de refroidissement fermé indépendant (9) directement vers l'échangeur thermique principal (5) au moyen d'un conduit de dérivation (18). La quantité de liquide détournée peut varier en fonction de la température à l'extérieur de l'avion et de la température à laquelle les groupes d'équipements électriques et électroniques (2, 3, 24) doivent être maintenus.

Les présentes illustrations de l'invention ne doivent pas être interprétées comme des limitations apportées à celle-ci. Les signes de référence dans les revendications n'ont aucun caractère limitatif. Les verbes « comprendre » et « comporter » n'excluent pas la présence d'autres éléments que ceux listés dans les revendications. Le mot « un » précédant un élément n'exclut pas la présence d'une pluralité de tels éléments.

## Revendications

1. Système de refroidissement pour équipements électriques ou électroniques à bord d'un aéronef, le système de refroidissement comprenant :
- un circuit de refroidissement fermé principal (4) adapté pour faire circuler un médium caloporteur dans le circuit de refroidissement fermé principal (4);
- un circuit de refroidissement fermé secondaire (6) adapté pour faire circuler un fluide caloporteur dans le circuit de refroidissement fermé secondaire (6) ;
- un premier échangeur thermique (5) permettant un transfert de chaleur du médium caloporteur circulant dans le circuit de refroidissement fermé principal (4) vers le fluide caloporteur circulant dans le circuit de refroidissement fermé secondaire (6), par l'évaporation du fluide caloporteur circulant dans le circuit de refroidissement fermé secondaire (6);
- un second échangeur thermique (7) permettant la condensation du fluide caloporteur circulant dans le circuit de refroidissement fermé secondaire (6);
- le second échangeur thermique (7) étant adapté pour refroidir le fluide caloporteur par couplage thermique à l'air ambiant externe.
**caractérisé en ce que** le système de refroidissement comprend:
- un circuit de refroidissement fermé tertiaire (11) comprenant un fluide caloporteur et au moins un compresseur (15) adapté pour faire circuler le fluide caloporteur dans le circuit de refroidissement fermé tertiaire (11), le circuit de refroidissement fermé tertiaire (11) étant fluidiquement indépendant du circuit de refroidissement fermé principal (4) et du circuit de refroidissement fermé secondaire (9) ;
- un troisième échangeur thermique (14) adapté pour refroidir le fluide caloporteur du circuit de refroidissement tertiaire (11) au moyen d'air ambiant externe par la condensation du fluide caloporteur circulant dans le troisième circuit de refroidissement fermé (11),
- le second échangeur thermique (10) étant adapté pour coupler thermiquement le fluide caloporteur du circuit de refroidissement fermé secondaire (9) au fluide caloporteur du circuit de refroidissement fermé tertiaire (11), et permet l'évaporation du fluide caloporteur circulant dans le circuit de refroidissement fermé tertiaire (11).

2. Système de refroidissement selon la revendication 1, dans lequel le circuit de refroidissement fermé principal (4) est adapté pour refroidir :
- un premier compartiment (2) comprenant des systèmes avioniques de l' aéronef; et
- un second compartiment (3) comprenant des équipements électriques de l'aéronef.

3. Système de refroidissement selon la revendication 2, dans lequel :
- le premier compartiment (2) et le second compartiment (3) sont placés en série dans le circuit de refroidissement fermé principal (4).

4. Système de refroidissement selon la revendication 2, dans lequel :
- le premier compartiment (2) et le second compartiment (3) sont placés en parallèle dans le circuit de refroidissement fermé principal (4).

5. Système de refroidissement selon l'une quelconque des revendications 2 à 4, dans lequel le circuit de refroidissement fermé principal (4) est adapté pour refroidir un troisième compartiment comprenant des instruments de vol du poste de pilotage de l'aéronef.

6. Système de refroidissement selon l'une quelconque des revendications précédentes, le système comprenant :
- une valve d'admission (20) et au moins une valve d'échappement (19) adaptées pour ouvrir le circuit de refroidissement fermé principal (4).

7. Système de refroidissement selon l'une quelconque des revendications 1 à 6, dans lequel le circuit de refroidissement fermé secondaire (9) comprend :
- un échangeur thermique supplémentaire (16) adapté pour coupler thermiquement le fluide caloporteur circulant dans le circuit de refroidissement fermé secondaire (9) directement à l'air ambiant externe;
- une valve de dérivation (17) placée en amont de l'échangeur thermique supplémentaire (16) et permettant de bloquer de façon au moins partielle la circulation du fluide caloporteur vers l'échangeur thermique secondaire (16); et
- un conduit de dérivation (18) reliant la valve de dérivation (17) à un point du circuit de refroidissement fermé secondaire (9) en aval de l'échangeur thermique supplémentaire (16) pour permettre au fluide caloporteur de contourner au moins partiellement l'échangeur thermique supplémentaire (16) en fonction d'un réglage de la valve de dérivation (7).

8. Système de refroidissement selon l'une quelconque des revendications 1 à 6, dans lequel le circuit de refroidissement fermé principal (4) comprend :
- un échangeur thermique supplémentaire (16), adapté pour coupler thermiquement le médium caloporteur circulant dans le circuit de refroidissement fermé principal (4) directement à l'air ambiant externe;
- une valve de dérivation (17) placée en amont de l'échangeur thermique supplémentaire (16) et permettant de bloquer de façon au moins partielle la circulation du médium caloporteur vers l'échangeur thermique supplémentaire (16); et
- un conduit de dérivation (18) reliant la valve de dérivation (17) à un point du circuit de refroidissement fermé principal (4) en aval de l'échangeur thermique supplémentaire (16) pour permettre au médium caloporteur de contourner au moins partiellement l'échangeur thermique supplémentaire (16) en fonction d'un réglage de la valve de dérivation (7).

9. Aéronef comportant un système de refroidissement selon l'une quelconque des revendications 1 à 8.

## Patentansprüche

1. Kühlsystem für elektrische oder elektronische Ausrüstung an Bord eines Luftfahrzeugs, wobei das Kühlsystem Folgendes umfasst:
- einen geschlossenen Hauptkühlkreislauf (4), der zum Zirkulieren eines Wärmeträgermediums im geschlossenen Hauptkühlkreislauf (4) geeignet ist;
- einen geschlossenen sekundären Kühlkreislauf (6), der zum Zirkulieren einer Wärmeträgerflüssigkeit im geschlossenen sekundären Kühlkreislauf (6) geeignet ist;
- einen ersten Wärmetauscher (5), der eine Wärmeübertragung des Wärmeträgermediums im geschlossenen Hauptkühlkreislauf (4) auf die im geschlossenen sekundären Kühlkreislauf (6) zirkulierende Wärmeträgerflüssigkeit ermöglicht, und zwar per Verdampfung der im geschlossenen sekundären Kühlkreislauf (6) zirkulierenden Wärmeträgerflüssigkeit;
- einen zweiten Wärmetauscher (7), der die Kondensation der im geschlossenen sekundären Kühlkreislauf (6) zirkulierenden Wärmeträgerflüssigkeit ermöglicht;
- der zweite Wärmetauscher (7) ist dazu angepasst die Wärmeträgerflüssigkeit per thermischer Kopplung an der Umgebungsluft außen zu kühlen.
**dadurch gekennzeichnet, dass** das Kühlsystem Folgendes umfasst:
- einen geschlossenen tertiären Kühlkreislauf (11), der eine Wärmeträgerflüssigkeit und mindestens einen Kompressor (15) umfasst und zum Zirkulieren der Wärmeträgerflüssigkeit im geschlossenen tertiären Kühlkreislauf (11) geeignet ist, wobei der geschlossene tertiäre Kühlkreislauf (11) flüssigkeitsmäßig unabhängig vom geschlossenen Hauptkühlkreislauf (4) und vom geschlossenen sekundären Kühlkreislauf (9) ist;
- einen dritten Wärmetauscher (14), der dazu angepasst ist die Wärmeträgerflüssigkeit im tertiären Kühlkreislauf (11) mithilfe von Umgebungsluft außen durch Kondensation der Wärmeträgerflüssigkeit im geschlossenen dritten Kühlkreislauf (11) zu kühlen,
- der zweite Wärmetauscher (10) ist dazu angepasst eine thermische Kopplung der Wärmeträgerflüssigkeit im geschlossenen sekundären Kühlkreislauf (9) mit der Wärmeträgerflüssigkeit des geschlossenen tertiären Kühlkreislaufs (11) vorzunehmen, und ermöglicht die Verdampfung der im geschlossenen tertiären Kühlkreislauf (11) zirkulierenden Wärmeträgerflüssigkeit.

2. Kühlsystem gemäß Anspruch 1, in dem der geschlossene Hauptkühlkreislauf (4) dazu angepasst ist Folgendes zu kühlen:
- einen ersten Abschnitt (2), der die Avioniksysteme des Luftfahrzeugs umfasst sowie
- einen zweiten Abschnitt (3), der die elektrische Ausrüstung des Luftfahrzeugs umfasst.

3. Kühlsystem gemäß Anspruch 2, in dem:
- der erste Abschnitt (2) und der zweite Abschnitt (3) in Serie im geschlossenen Hauptkühlkreislauf (4) angeordnet sind.

4. Kühlsystem gemäß Anspruch 2, in dem:
- der erste Abschnitt (2) und der zweite Abschnitt (3) parallel im geschlossenen Hauptkühlkreislauf (4) angeordnet sind.

5. Kühlsystem gemäß einem der Ansprüche 2 bis 4, in dem der geschlossene Hauptkühlkreislauf (4) dazu angepasst ist, einen dritten Abschnitt zu kühlen, der die Fluginstrumente des Cockpits des Luftfahrzeugs umfasst.

6. Kühlsystem gemäß einem der vorstehenden Ansprüche, das Folgendes umfasst:
- ein Einlassventil (20) und mindestens ein Auslassventil (19), die dazu angepasst sind den geschlossenen Hauptkühlkreislauf (4) zu öffnen.

7. Kühlsystem gemäß einem der vorstehenden Ansprüche 1 bis 6, in dem der geschlossene sekundäre Kühlkreislauf (9) Folgendes umfasst:
- einen zusätzlichen Wärmetauscher (16), der dazu angepasst ist eine thermische Kopplung der Wärmeträgerflüssigkeit im geschlossenen sekundären Kühlkreislauf (9) direkt mit der Umgebungsluft außen vorzunehmen;
- ein Ableitungsventil (17), das vor dem zusätzlichen Wärmetauscher (16) platziert ist und zumindest eine teilweise Blockierung der Zirkulation der Wärmeträgerflüssigkeit zum sekundären Wärmetauscher (16) ermöglicht; und
- ein Umgehungsrohr (18), das das Ableitungsventil (17) mit einem Punkt des geschlossenen sekundären Kühlkreislaufs (9) nach dem zusätzlichen Wärmetauscher (16) verbindet, um der Wärmeträgerflüssigkeit zumindest teilweise zu ermöglichen, den zusätzlichen Wärmetauscher (16) zu umgehen, je nach Einstellung des Ableitungsventils (17).

8. Kühlsystem gemäß einem der vorstehenden Ansprüche 1 bis 6, in dem der geschlossene Hauptkühlkreislauf (4) Folgendes umfasst:
- einen zusätzlichen Wärmetauscher (16), der dazu angepasst ist eine thermische Kopplung des Wärmeträgermediums im geschlossenen Hauptkühlkreislauf (4) direkt mit der Umgebungsluft außen vorzunehmen;
- ein Ableitungsventil (17), das vor dem zusätzlichen Wärmetauscher (16) platziert ist und zumindest eine teilweise Blockierung der Zirkulation des Wärmeträgermediums zum zusätzlichen Wärmetauscher (16) ermöglicht; und
- ein Umgehungsrohr (18), das das Ableitungsventil (17) mit einem Punkt des geschlossenen Hauptkühlkreislaufs (4) nach dem zusätzlichen Wärmetauscher (16) verbindet, um dem Wärmeträgermedium zumindest teilweise zu ermöglichen, den zusätzlichen Wärmetauscher (16) zu umgehen, je nach Einstellung des Ableitungsventils (17).

9. Luftfahrzeug, das ein Kühlsystem gemäß einem der vorstehenden Ansprüche 1 bis 8 umfasst.

## Claims

1. A cooling system for electrical or electronic equipment on board an aircraft, the cooling system comprising:
- a main closed cooling circuit (4) adapted to circulate a heat transfer medium in the main closed cooling circuit (4);
- a secondary closed cooling circuit (6) adapted to circulate a heat transfer fluid in the secondary closed cooling circuit (6);
- a first heat exchanger (5) to transfer heat from the heat transfer medium circulating in the main closed cooling circuit (4) to the heat transfer fluid circulating in the secondary closed cooling circuit (6), by evaporation of the heat transfer fluid circulating in the secondary closed cooling circuit (6);
- a second heat exchanger (7) to condense the heat transfer fluid circulating in the secondary closed cooling circuit (6);
- the second heat exchanger (7) being adapted to cool the heat transfer fluid by thermal coupling with the external ambient air.
**characterised in that** the cooling system comprises:
- a tertiary closed cooling circuit (11) comprising a heat transfer fluid and at least one compressor (15) adapted to circulate the heat transfer fluid in the tertiary closed cooling circuit (11), the tertiary closed cooling circuit (11) being fluidly independent from the main closed cooling circuit (4) and from the secondary closed cooling circuit (9);
- a third heat exchanger (14) adapted to cool the heat transfer fluid in the tertiary cooling circuit (11) using external ambient air by condensing the heat transfer fluid circulating in the third closed cooling circuit (11),
- the second heat exchanger (10) being adapted to thermally couple the heat transfer fluid in the secondary closed cooling circuit (9) with the heat transfer fluid in the tertiary closed cooling circuit (11), and to allow evaporation of the heat transfer fluid circulating in the tertiary closed cooling circuit (11).

2. A cooling system according to claim 1, wherein the main closed cooling circuit (4) is adapted to cool:
- a first compartment (2) comprising the aircraft avionics systems; and
- a second compartment (3) comprising the aircraft electrical equipment.

3. A cooling system according to claim 2, wherein:
- the first compartment (2) and the second compartment (3) are placed in series in the main closed cooling circuit (4).

4. A cooling system according to claim 2, wherein:
- the first compartment (2) and the second compartment (3) are placed in parallel in the main closed cooling circuit (4).

5. A cooling system according to any of claims 2 to 4, wherein the main closed cooling circuit (4) is adapted to cool a third compartment comprising aircraft cockpit flight instruments.

6. A cooling system according to any of the preceding claims, the system comprising:
- an intake valve (20) and at least one exhaust valve (19) adapted to open the main closed cooling circuit (4).

7. A cooling system according to any of claims 1 to 6, wherein the secondary closed cooling circuit (9) comprises:
- an additional heat exchanger (16) adapted to thermally couple the heat transfer fluid circulating in the secondary closed cooling circuit (9) directly with the external ambient air;
- a bypass valve (17) placed upstream from the additional heat exchanger (16) so as to block at least partially the circulation of heat transfer fluid to the secondary heat exchanger (16); and
- a bypass pipe (18) connecting the bypass valve (17) to a point of the secondary closed cooling circuit (9) downstream from the additional heat exchanger (16) to allow the heat transfer fluid to bypass at least partially the additional heat exchanger (16) depending on the setting of the bypass valve (7).

8. A cooling system according to any of claims 1 to 6, wherein the main closed cooling circuit (4) comprises:
- an additional heat exchanger (16) adapted to thermally couple the heat transfer fluid circulating in the main closed cooling circuit (4) directly with the external ambient air;
- a bypass valve (17) placed upstream from the additional heat exchanger (16) so as to block at least partially the circulation of heat transfer fluid to the additional heat exchanger (16); and
- a bypass pipe (18) coupling the bypass valve (17) to a point of the main closed cooling circuit (4) downstream from the additional heat exchanger (16) to allow the heat transfer fluid to bypass at least partially the additional heat exchanger (16) depending on the setting of the bypass valve (7).

9. An aircraft comprising a cooling system according to any of claims 1 to 8.
